# EUROPÄISCHE PATENTSCHRIFT

(11) **EP 0 865 119 B1**
(45) Veröffentlichungstag und Bekanntmachung des Hinweises auf die Patenterteilung: **18.06.2003**
(21) Anmeldenummer: 98104404.3
(22) Anmeldetag: 11.03.1998
(51) Int. Cl.: H01R 31/00

(54) **Anschlussdose für ein Verteilernetz**
Junction box for a distribution system
Boîte de connexion pour un système de distribution

(30) Priorität: 11.03.1997 DE 19709972
(43) Veröffentlichungstag der Anmeldung: 16.09.1998
(73) Patentinhaber: HomeWay GmbH, 96465 Neustadt/Coburg (DE)
(72) Erfinder: Cremer, Cornelius, Dr., 85586 Poing (DE); Stoll, Lothar, Dr., 80686 München (DE); Kossat, Rainer, Dipl.-Ing., 83229 Aschau (DE); Lederer, Tobias, Dipl.-Ing., 80687 München (DE)
(74) Vertreter: Skuhra, Udo, Dipl.-Ing.

(56) Entgegenhaltungen:
- EP-A- 0 671 856
- US-A- 5 117 122
- US-A- 5 176 534
- US-A- 5 562 493

## Beschreibung

Die Erfindung betrifft ein Verteilernetz gemäß dem Oberbegriff des Patentanspruchs 1.

Ein Verteilernetz dieser Art ist aus der DE-28 18 656 A1 bekannt. Die eingesetzten Kabel bestehen aus gegeneinander isolierten elektrischen Leiterpaaren sowie einem Lichtwellenleiter (Hybridkabel). Für den Anschluß der Teilnehmer sind Spleißmuffen vorgesehen, von denen aus ein Hybrid-Anschlußkabel zu den einzelnen Teilnehmern führt, bei welchen sowohl ein elektrischer als auch ein optischer Anschluß vorgesehen ist.

Die WO 88/02190 beschreibt eine Anschlußeinrichtung, bei der in der Art einer Enddose zwei elektrische Kabel jeweils zu einer Klemmleiste geführt und im Inneren einer Anschlußdose arretiert untergebracht sind. Durch Aufsetzen entsprechender, ebenfalls mit Kontakteinrichtungen versehener Anschlußdeckel werden Anschlüsse für Teilnehmeranschlußleitungen und die mit diesen verbundenen Geräte bereitgestellt.

Bei der Planung eines Verteilernetzes, z.B. innerhalb eines großeren Gebaudes, innerhalb eines Hauses, innerhalb einer Wohnung o. dgl. kann man häufig im voraus nicht genau festlegen, in welchen Räumen, an welchen Orten und wo genau ein Gerät für einen speziellen Informationskanal/Dienst angeschlossen werden soll. Probleme treten auch auf, wenn ein Teilnehmergerät von einem Ort zu einem anderen Ort umziehen soll und dort nicht die richtigen Anschlußmöglichkeiten zur Verfügung stehen. Kommt ein neuer Informationskanal/Dienst hinzu, kann man diesen häufig nicht nutzen, da sehr oft keine geeigneten Kabel für dessen Verteilung vorab verlegt wurden.

Eine mögliche Lösung dieses Problems besteht darin, an jedem möglichen Anschlußort alle Anschlußmoglichkeiten für sämtliche Informationskanäle/Dienste bereitzustellen. Dies erfordert jedoch einen viel zu großen Aufwand, da sehr viele Anschlußmöglichkeiten für Teilnehmergeräten bestehen, in der Praxis aber nur relativ wenige Teilnehmergeräte angeschlossen werden.

Der Erfindung liegt die Aufgabe zugrunde, einen Weg aufzuzeigen, wie sich in einfacher Weise und ohne großen Aufwand Anschlußmöglichkeiten für die verschiedensten Informationskanäle bzw. Dienste bereitstellen lassen. Diese Aufgabe wird durch ein Verteilernetz mit den in Patentanspruch 1 angegebenen Merkmalen gelöst.

Die in das Netz eingebundenen Anschlußdosen sind derart aufgebaut, daß man bei Bedarf nur den dem jeweiligen Dienst zugeordneten Funktionsdeckel aufsetzen muß, um eine Anschlußmöglichkeit für das entsprechende Teilnehmergerät zu schaffen. Umständliche Klemm- und Anschlußarbeiten im Inneren der Dose sind somit nicht mehr erforderlich. Da sowohl die Anschlußdose als auch der Funktionsdeckel korrespondierende, exakt zueinander passende Steckeinrichtungen/Buchsen aufweisen, kann der gewünschte Dienst durch Einstecken des zum Teilnehmergerat führenden Verbindungskabels abgegriffen werden.

Die abhängigen Ansprüche betreffen Ausgestaltungen und Weiterbildungen der Erfindung. Diese wird im folgenden anhand von Zeichnungen erläutert.

Es zeigen:
- Figur 1: ein erstes Ausführungsbeispiel einer geöffneten Anschlußdose in Draufsicht,
- Figur 2: einen zur Anschlußdose nach Figur 1 passenden Funktionsdeckel gemäß der Erfindung,
- Figur 3: die im Anschlußdeckel durchgeschleifte Verbindung für die Anschlußdose nach Figur 1,
- Figur 4: und 5 einen mit einer ISDN-Buchse versehnen Funktionsdeckel für die Anschlußdose gemäß Fig. 1 in Seitenansicht und dessen dosenseitger Aufbau,
- Figur 6: ein weiteres Ausführungsbeispiel einer Anschlußdose mit Durchschleifung im Doseninnern,
- Figur 7: und 8 einen mit einer ISDN-Steckbuchse ausgestatteten Funktionsdeckel für die Anschlußdose nach Figur 6,
- Figur 9: und 10 zeigen die Ausführung eines FunktionsDeckels für eine Anschlußdose gemäß Figur 6 mit koaxialem Anschluß,
- Figur 11: ein drittes Ausführungsbeispiel einer geöffneten Anschlußdose,
- Figur 12: und 13 mögliche Ausführungsformen eines Funktionsdeckels für die Anschlußdose gemäß Fig. 11,
- Figur 14: ein Verlängerungskabel für eine Anschlußdose nach der Erfindung,
- Figur 15: ein Ausführungsbeispiel für eine modular aufgebaute Anschlußdose,
- Figur 16: verschiedene Ansichten einer Kontaktiereinheit der modular aufgebauten Anschlußdose,
- Figur 17: den deckelseitigen Modul der Anschlußdose gemäß Figur 15 in perspektivischer Darstellung,
- Figur 18: den hinteren Modul der Anschlußdose gemäß Figur 15,
- Figur 19: und 20 jeweils Ausführungsbeispiele deckelseitiger Module der Anschlußdose gemäß Figur 15 und
- Figur 21: den schematischen Aufbau eines erfindungsgemäßen Verteilernetzes.

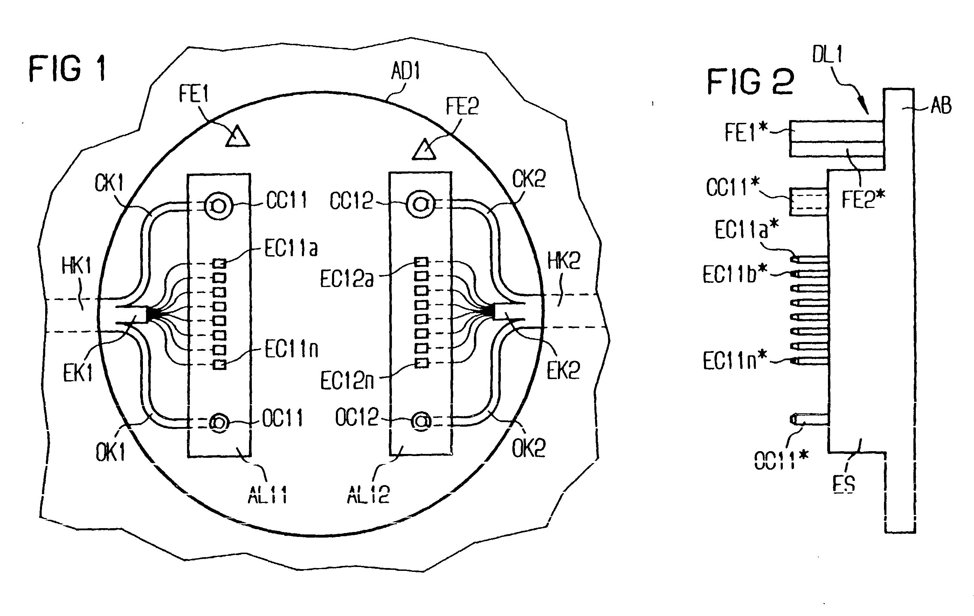

In Figur 1 ist ein der Verteilung verschiedener, im folgenden als Dienste bezeichneter Informationskanäle dienendes Hybridkabel HK1 dargestellt, welches von links in das Innere einer Anschlußdose AD1 eintritt. Die Zuführung dieses Kabels HK1 kann natürlich auch aus einer anderen Richtung, z.B. von der Rückseite der Dose AD1 her erfolgen. Das Hybridkabel HK1 enthält mindestens zwei unterschiedliche, verschiedenen Diensten zugeordnete Leitungen, wobei im vorliegenden Beispiel von drei unterschiedlichen Leitungen/Kabeln ausgegangen ist. Im Inneren des Hybridkabel HK1 ist im konkreten Beispiel ein Koaxialkabel CK1 vorgesehen. Außerdem enthält es ein aus mehreren, vorzugsweise zu Paaren oder Vierern zusammengefaßten und miteinander verseilten elektrischen Leitern bestehendes Bündelkabel EK1 sowie ein Lichtwellenleiterkabel OK1. Es ist natürlich auch möglich, die den einzelnen Diensten zugeordneten Kabel CK1, EK1 und OK1 getrennt und vorzugsweise parallel zueinander zu verlegen. Ihre Zusammenfassung zu einem Hybridkabel ist also nicht zwingend erforderlich. Weiterhin kann das Kabel HK1 nur Unterkombinationen der genannten Einzelkabel enthalten, also beispielsweise aus einem mehradrigen elektrischen Bündelkabel EK1 und einem Koaxialkabel CK1 oder nur aus dem Koaxialkabel CK1 und einem optischen Kabel OK1 bestehen.

Das von der Anschlußdose AD1 abgehende Kabel HK2 ist analog zum ankommenden Kabel HK1 aufgebaut und weist somit ebenfalls ein Koaxialkabel CK2, ein elektrisches Bündelkabel EK2 und ein Lichtwellenleiterkabel OK2 auf.

Im Inneren der Anschlußdose AD1 sind zwei Anschlußleisten AL11 und AL12 vorgesehen, die vorzugsweise fest angeordnet und vorteilhaft gleich ausgebildet sind. Sie weisen jeweils als Steckbuchsen ausgebildete Anschlußeinrichtungen für die einzelnen Dienste auf. So sind bei der Anschlußleiste AL11 eine koaxiale Steckbuchse CC11, eine Reihe von elektrischer Steckbuchsen EC11a - EC1n sowie eine Lichtwellenleiter-Steckverbindung OC11 vorgesehen. Soweit es sich um elektrische Anschlußeinrichtungen handelt, sind diese in bekannter Weise so zu führen und anzuordnen, daß die notwendige elektrische Schirmung bzw. Entkopplung der einzelnen Dienste gegeneinander gewährleistet ist.

Die vorzugsweise entsprechend der ersten Anschlußleiste AL11 ausgebildete und symmetrisch zu dieser angeordnete zweite Anschlußleiste AL12 weist ebenfalls eine koaxiale Steckbuchse CC12, einzelne elektrische Steckbuchsen EC12a -- EC12n sowie eine Lichtwellenleiter-Steckverbindung OC12 auf.

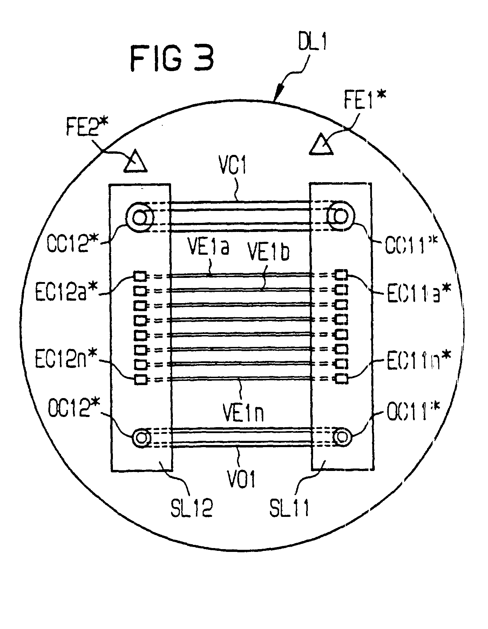

In der dargestellten Form ist das durch die Hybridkabel HKL und HK2 symbolisierte Verteilungssystem nicht betriebsfähig, da zwischen dem ankommenden Kabel HK1 und dem abgehenden Kabel HK2 keine Verbindung besteht. Erst durch Aufsetzen des in Figur 2 dargestellten Funktionsdeckels DL1 wird diese Verbindung hergestellt. Der Deckel DL1 ist in Figur 2 in Seitenansicht und in Figur 3 von innen gesehen dargestellt. Er weist eine den offenen Raum der Anschlußdose AD1 vorteilhaft ganz oder zumindest teilweise überdeckende Abdeckplatte AB1 sowie einen Fort- oder Einsatz ES auf. Am Einsatz ES sind Kontakteinrichtungen in einer Verteilung und Konfiguration angebracht, die genau zu der Verteilung der Steckbuchsen auf den Anschlußleisten AL11 und AL12 korrespondiert. Bei den in Figur 2 gewählten Darstellung sind nur die vorderen Steckerstifte zu sehen, während die flüchtend dahinter liegenden, der zweiten Anschlußleiste AL12 zugeordneten Steckerstifte durch diese verdeckt werden und erst in der die Innenseite des Funktionsdeckels DL1 zeigenden Figur 3 zu erkennen sind. Der koaxiale Steckerstift CC11* paßt somit in die Steckbuchse CC11, während die Steckerstifte EC11a* - EC11n* in die Steckbuchsen EC11a - EC11n und der optische Steckerstift OC11* in die optische Steckbuchse OC11 kontaktgebend eingreifen. Wie die um 90° gegenüber Figur 2 nach rechts gekippten Figur 3 zeigt, sind im Deckel DL1 ebenfalls zwei zu der Anschlußleisten AL11 und AL12 korrespondierende Steckerleisten SL11 und SL12 vorgesehen. Sie sind jeweils mit in der gleichen räumlichen Anordnung angebrachten Steckerstiften CC12*, EC12a* - EC12n* und OC12* (passend zu der in Fig. 1 als AL12 bezeichneten Anschlußleiste) bzw. CC11*, EC11a* - EC11n und OC11* (passend zu der als AL11 bezeichneten Anschlußleiste) bestückt.

Im gezeigten Ausführungsbeispiel sind die Steckbuchsen jeweils in der Dose AD1 und die Steckerstifte im Deckel DL1 angeordnet. Es ist selbstverständlich auch möglich, die Buchsen im Deckel und die Stifte in der Dose vorzusehen. Eine gemischte Anordnung kommt ebenfalls in Betracht.

Die jeweiligen Anschlußelemente der beiden Steckerleisten SL11 und SL12 im Funktionsdeckel DL1 sind durch entsprechende Leitungen miteinander verbunden und damit durchgeschleift. Diese Verbindungsleitungen sind hier nur schematisch angedeutet. Für die beiden Koaxialanschlusse CC11* und CC12* ist die koaxiale Durchverbindung bzw. Durchschleifung VC1 vorgesehen, während die elektrischen Kontakte EC11a* - EC11*n jeweils mit den korrespondierenden elektrischen Kontakten EC12a* - EC12n über die Verbindungsleitungen VE1a - VE1n durchgeschleift sind. Die optischen Anschlußstecker OC11* und OC12* sind durch eine optische Verbindungsleitung VO1, z.B. in Form eines Lichtwellenleiters, miteinander verbunden. Sitzt der Funktionsdeckel DL1 auf der Anschlußdose AD1 nach Figur 1 auf, ist das Kabel HK1 mit allen seinen Leitungen vollständig mit dem abgehenden Kabel HK2 verbunden und jeder Dienst durchgeschleift. Da der Funktionsdeckel DL1 keine Anschlußmöglichkeit für ein Teilnehmergerät aufweist, wird er im Verteilernetz dort eingesetzt, wo (zunächst) noch kein Teilnehmeranschluß erforderlich ist ("Leerdose").

Das Aufbringen des Funktionsdeckels DL1 auf die Anschlußdose AD1 muß natürlich so erfolgen, daß eine exakte Zuordnung der jeweiligen Kontakte (d.h. der Steckbuchsen auf den Anschlußleisten AL11 und AL12 zu den Steckerstiften auf den Steckerleisten SL11 und SL12) gewährleistet ist. Es ist daher zweckmäßig, mechanische Führungseinrichtungen FE1, FE2 (z.B. in Form von Stiften o. dgl.) in der Anschlußdose AD1 vorzusehen, welche in entsprechende Führungseinrichtungen FE1*, FE2* (z.B. Führungsbuchsen) des Deckels DL1 passen und so sicherstellen, daß der Deckel DL1 in der die Durchschleifung gewährleistenden raumlichen Konfiguration auf der Anschlußdose AD1 aufgesetzt.

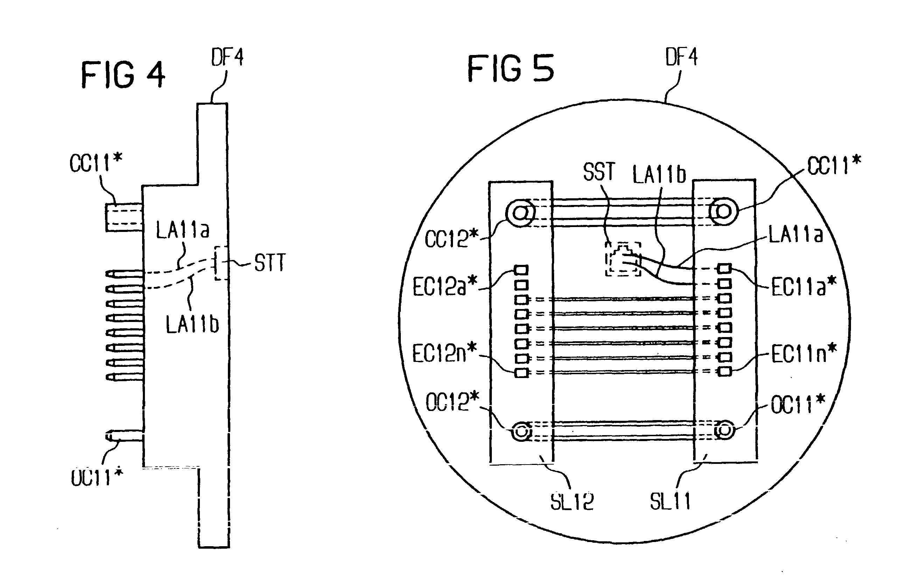

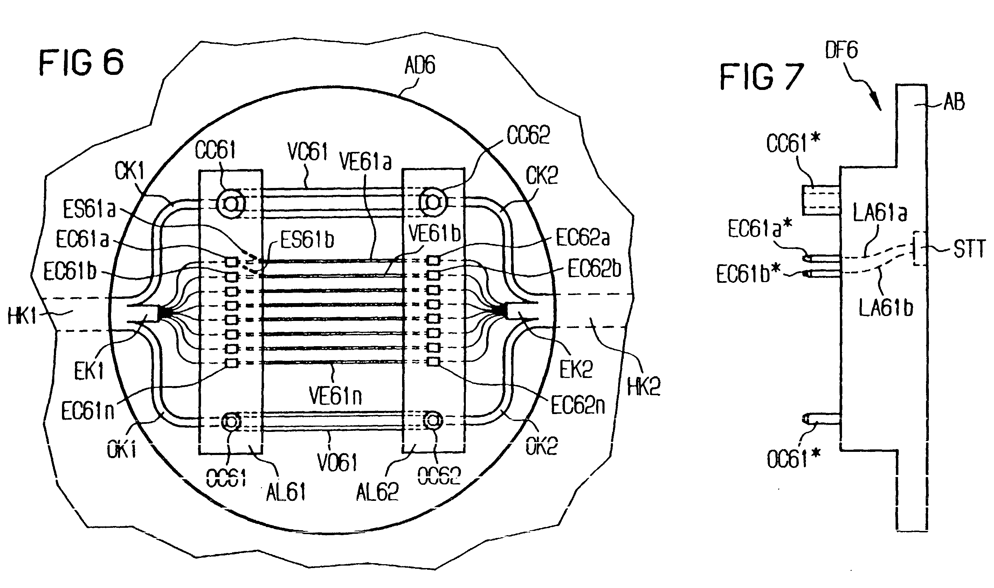

In den Figuren 4 und 5 ist dargestellt, wie bei einer entsprechend Figur 1 bestückten Anschlußdose ein Telefon - Teilnehmeranschluß ("TAE"-Anschluß) bereitgestellt wird. Der Funktionsdeckels DF4 ist dann mit einem der Norm entsprechenden, von außen zugänglichen Steckanschluß STT ausgestattet ( siehe die Figuren 4 und 5). Anstelle des Funktionsdeckels DL1 entsprechend Figur 2 wird dann der Funktionsdeckel DF4 aufgesetzt, dessen Bestückung mit Steckerstiften, wie durch die Übernahme der Bezugszeichen aus Figur 2 angedeutet, in der gleichen-Weise wie beim oben beschriebenen Funktionsdekkel DL1 erfolgt. Im folgenden sei unterstellt, daß die ersten beiden elektrischen Steckerstifte EC11a und EC11b zur Versorgung eines Zweidraht-Telefon-Teilnehmeranschlusses herangezogen werden sollen. Deshalb sind in Figur 5 die entsprechenden Verbindungsleitungen VE1a und VE1b nicht mehr durchgezogen (durchgeschleift), sondern als Adern LA11a und LA11b nur noch bis zum Steckanschluß STT für das nicht dargestellte Teilnehmeranschlußkabel geführt.

In Figur 6 ist eine Anschlußdose AD6 dargestellt, bei der das eingehende und das abgehende Kabel HK1 und HK2 den gleichen Aufbau besitzen wie in Figur 1. Deren Anschluß an die beiden Anschlußleisten AL61 und AL62 (die übrigen analog zu den Anschlußleisten AL11 und AL12 von Figur 1 aufgebaut sind) erfolgt ebenso wie bei Figur 1 und sie weisen auch die gleichen, nach außen gerichteten Steckbuchsen CC61 - OC62 auf. Der wesentliche Unterschied hinsichtlich der in den Figuren 1 - 5 dargestellten Ausführungsformen besteht darin, daß die Durchschleifung im Inneren der Anschlußdose AD6 vorgenommen wird, also zwischen den Anschlußleisten AL61 und AL62. Hierzu sind Durchschleifleitungen VC61 (für die Koaxialleitung), VE61a - VE61n (für das elektrische Bündelkabel) und VO61 (für das optische Kabel) vorgesehen. Da innerhalb der Anschlußdose AD6 die Durchverbindung der Kabel HK1 und HK2 bereits sichergestellt ist, braucht eine für die Montage vorbereitete und entsprechend aufgebaute Anschlußdose im Nichtbenutzungsfall nur mit einer einfachen steckerlosen Abdeckplatte verschlossen werden (nicht dargestellt).

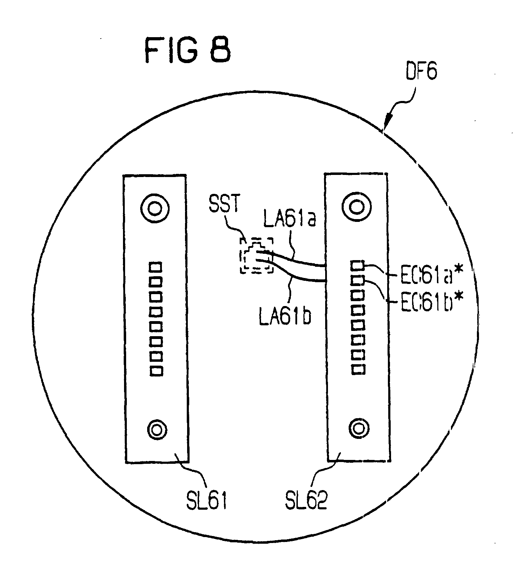

Beim Anschluß eines Teilnehmergerätes, beispielsweise eines Telefonapparates, wird ein Funktionsdeckel DF6 auf die Anschlußdose AD6 aufgebracht, wie er in Figur 7 in Seitenansicht und in Figur 8 von innen gesehen dargestellt ist. Dieser Funktionsdeckel DF6 weist lediglich zwei, ggf. auf Stekkerleisten SL61 und SL62 angebrachte Steckerstifte EC61a* und EC61b* auf, welche (unter der Annahme, daß das Kabel HK1 die ankommende und das Kabel HK2 die abgehende Leitung darstellt) in die Steckbuchsen EC61a und EC61b der Steckerleiste AL61 eingeführt werden. Um die Eindeutigkeit des Anschlusses zu gewährleisten, sind nachfolgende Leitungen im allgemeinen zu blockieren, was dadurch geschehen kann, daß mit dem Einstekken der Steckerstifte EC61a* und EC61b* in die Steckerleiste AL61 die Durchschleifleitungen VE61a und VE61b unterbrochen werden. Dies kann beispielsweise dadurch erreicht werden, daß entsprechende Schalter, - gestrichelt angedeutet und mit ES61a und ES61b bezeichnet - durch das Einstecken der Stekkerstifte EC61a* und EC61b* geöffnet werden. An der Außenseite der Funktionsdeckels DF4 ist der übliche Steckeranschluß (Steckbuchse) STT für ein Telefonanschlußkabel analog zu Figuren 4 und 5 vorgesehen, dessen Anschlußleitungen mit LA61a und LA61b bezeichnet sind.

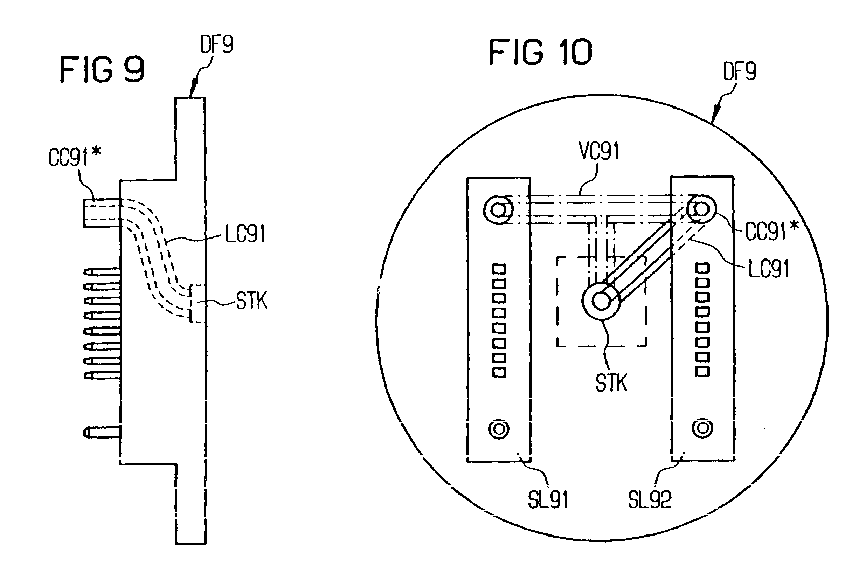

In Figur 9 ist ein Funktionsdeckel DF9 in Seitenansicht und in Figur 10 von innen gesehen dargestellt, wobei hier zunächst davon ausgegangen wird, daß ein Anschluß bzw. eine Ankopplung an die koaxiale Verteilerleitung, also das Koaxialkabel CK1 bzw. CK2 nach Figur 6 erfolgen soll. Die Durchschleifung ist als in der zugehörigen Anschlußdose vorhanden vorausgesetzt, d.h. diese hat einen Aufbau wie in Figur 6 dargestellt. Der Funktionsdeckel DF9 ist somit innen lediglich mit einem koaxiale Steckerstift CC91* versehen, welcher in eine der Steckbuchsen z.B. CC61* der Figur 6 kontaktierend eingreift. Auf diese Weise ist an dem außen zugänglichen, mit der durchgeschlüpften Koaxialleitung über die vorzugsweise koaxiale) Stichleitung LC91 verbundenen koaxialen Steckanschluß STK am Funktionsdeckel DF9 ein Koaxialanschluß für ein Teilnehmergerät möglich. Zur Entkopplung der Teilnehmerleitung gegenüber der Durchgangsleitung können Widerstände oder Koppler (z.B. 20 dB- oder 3 dB-Koppler) dienen. Weiterhin sollte auf eine möglichst geringe Störung des Wellenwiderstandes geachtet werden. Durch den Einsatz von Frequenzfiltern (Weichen) können selektiv bestimmte Informationskanäle der breitbandigen Koaxialleitung ausgekoppelt werden. Etwaige Entkopplungs-, Trennmittel oder Frequenzfilter (Weichen) können ebenfalls mit in den Funktionsdeckel DF9 integriert werden. Als Kontakte bzw. Steckeinrichtungen im Koaxialbereich (CC91*, STK usw.) können bevorzugt sogenannte IEC-Stecker verwendet werden.

Ware eine Durchschleifung im Deckel vorgesehen (analog DL1 in Figur 3), dann wurde man den Koaxialanschluß STK zweckmäßig an die strichpunktiert gezeichnete Durchschleifleitung VC91 (entspricht VC1 in Figur 3) entsprechend ankoppeln. Die Durchschleifung der übrigen Dienste zwischen den Stecker-leisten SL91 und SL92 ist hier zu Vereinfachung nicht dargestellt.

Bei Enddosen ist eine Durchschleifung zu weiteren Teilnehmern nicht mehr erforderlich. In diesem Fall sollte ein entsprechender Enddosen - Funktionsdeckel vorgesehen werden, der z. B. den Abschlußwiderstand für die Koaxialleitung enthält.

Die Ankopplung an die auf optischen Kabeln übertragenen Dienste erfolgt analog zu den Überlegungen bei der Ankopplung an Koaxialleitungen, d.h. es werden entsprechende Koppler, z.B. Biegekoppler o. dgl. verwendet, wobei man auch Frequenzfilter (Weichen) usw. einsetzen kann.

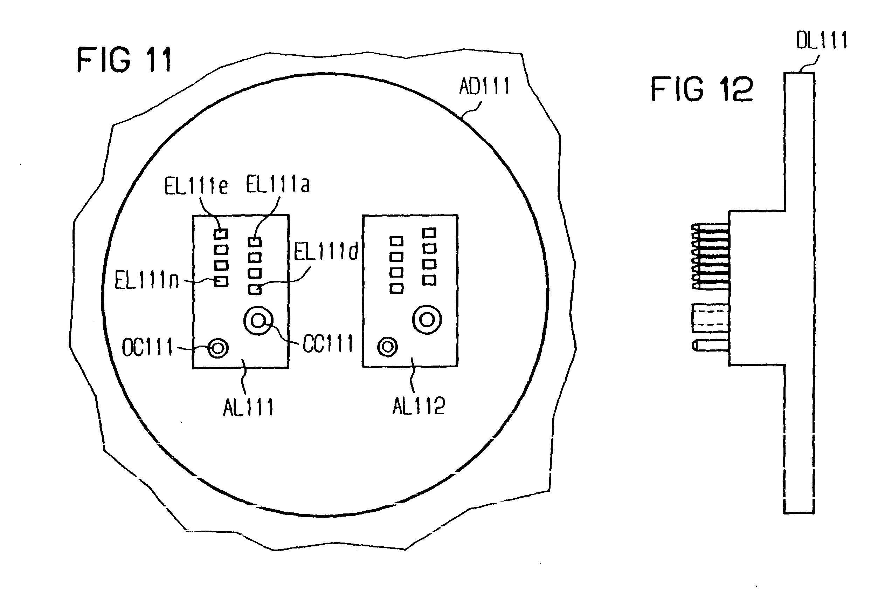

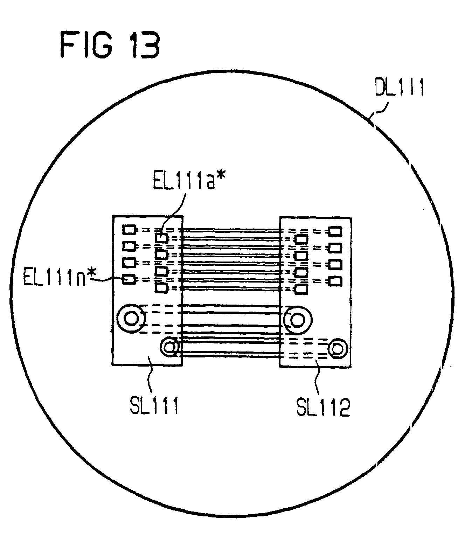

Die Anschlußleisten AL11 und AL12 nach Figur 1 in der Anschlußdose sowie die Steckerleisten SL11 und SL12 im Funktionsdeckel müssen nicht unbedingt den in den Figuren 1 bis 10 dargestellten Aufbau besitzen. Es ist auch möglich, je nach Bedarf, andere Anordnungen vorzusehen, wie dies beispielsweise in den Figuren 11 - 13 dargestellt ist. Figur 11 zeigt eine offene Anschlußdose AD111, Figur 12 den Aufbau eines entsprechenden Deckels Dl111 in Seitenansicht und Figur 13 in Draufsicht. Demnach ist hier analog zu Figur 3 die Durchschleifung im Deckel DL111 durchgeführt und die Ausbildung und Anordnung der verschiedenen Steckerstifte im Durchschleifdeckel DL111 entspricht der Anordnung und räumlichen Verteilung der Steckbuchsen in der Anschlußdose AD111 nach Figur 11. Die Anschlußleiste AL111 ist jedoch abweichend so gestaltet, daß ihre Kontakte jeweils in zwei Reihen nebeneinander angeordnet sind. In der äußeren Reihe befindet sich beispielsweise die optische Steckbuchse OC111 und ein Teil der elektrischen Anschlüsse EL111n - EL111e der elektrischen Leiter, während der zweite Teil der Steckbuchsen für die elektrischen Leiter EL111a - EL111d in der zweiten Reihe daneben angeordnet ist und zwar zusammen mit der Koaxialbuchse CC111. Der Aufbau in dem der Durchschleifung dienenden Deckel ist mit den Steckerleisten SL111 und SL112 spiegelbildlich analog gewählt, wie durch die mit * bezeichneten korrespondierenden Steckerstifte erkennbar ist.

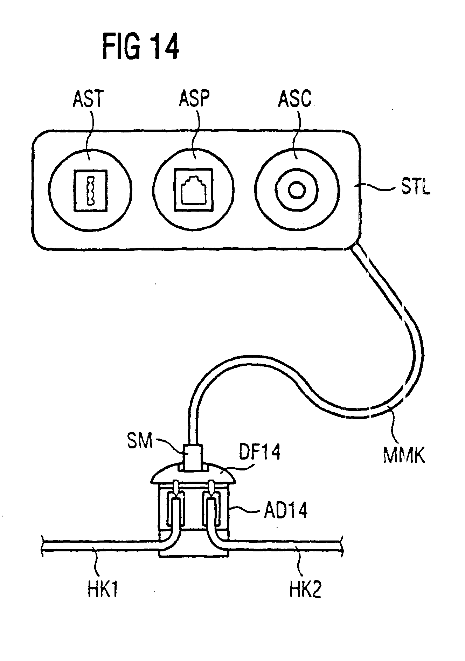

Die Anschlußdosen gemäß den vorhergehenden und noch zu beschreibenden Figuren können im Boden oder in Wänden angeordnet sein. Es ist aber auch möglich, sie anders, z.B. in entsprechenden Verteilerkästen oder in Aufputzdosen usw. anzuordnen. Schließlich ist es auch möglich, entsprechend Figur 14 an eine Anschlußdose AD14 (hier nur schematisch dargestellt) einen Funktionsdeckel DF14 z.B. analog den Figuren 4/5, 7/8 oder 9/10 anzubringen, mit dem Unterschied, daß hier ein Mehrfachsteckanschluß SM für ein breitbandiges Multifunktions- oder Multimediakabel MK angeschlossen wird. Dieses Multifunktionskabel MK ist zu einer Anschlußleiste STL geführt, die bevorzugt als lose Steckerleiste ausgebildet ist. Es ist aber auch möglich, sie an entsprechender Stelle z.B. in oder an einer Wand zu befestigen. In dieser Steckerleiste STL sind Anschluß-Steckbuchsen für die verschiedenen Dienste vorgesehen, so z.B. ein erster Anschluß ASD für einen normalen Telefonanschluß, ein Anschluß ASP für einen sogenannten RJ45-Stecker und ein Koaxialanschluß ASC z.B. IEC-Norm. Das Durchschleifen bzw. das Unterbrechen der verschiedenen Dienste erfolgt analog zu den im Zusammenhang mit den vorhergehenden Figuren beschriebenen Überlegungen mit Funktionsdekkeln.

In den bisher beschriebenen Anschlußdosen werden die den einzelnen Diensten (analoges bzw. digitales Telefon, analoges bzw. digitales Fernsehen, Fax, LAN, 10 Base T, 100 Base T, FDDI usw.) zugeordneten Kabel bzw. Leitungen einer gemeinsamen Anschlußleiste zugeführt und mit den jeweiligen Steckbuchsen verbunden. Da die im Bereich der Anschlußleisten sehr nahe beieinanderliegenden Leitungen Signale unterschiedlichster Pegel und Frequenzen führen, kann es unter Umständen zu einer Störungen verursachenden Wechselwirkung zwischen einzelnen Diensten kommen. Besonders hohe Anforderungen hinsichtlich des als Nahnebensprechen oder NEXT (Near End Crosstalk) bezeichneten Effektes stellen hierbei LAN-Anwendungen (FDDI, Internet, token-ring), wo die Datenübertragungsraten mehr als 100 MBit/Sek. betragen können.

Durch den modularen Aufbau der Anschlußdose lassen sich die verschiedenen Dienste optimal von einander trennen und Wechselwirkungen zwischen ihnen vermeiden. Die Funktionalität der Dose, also die einfache Verfügbarkeit des gewünschten Dienstes durch Aufsetzen des entsprechenden Funktionsdeckels, wird hierdurch nicht beeinträchtigt. Außerdem kann man einzelne Module der Dose leicht austauschen oder einen einem Modul zugeordneten Kabeltyp durch einen anderen Kabeltyp ersetzen.

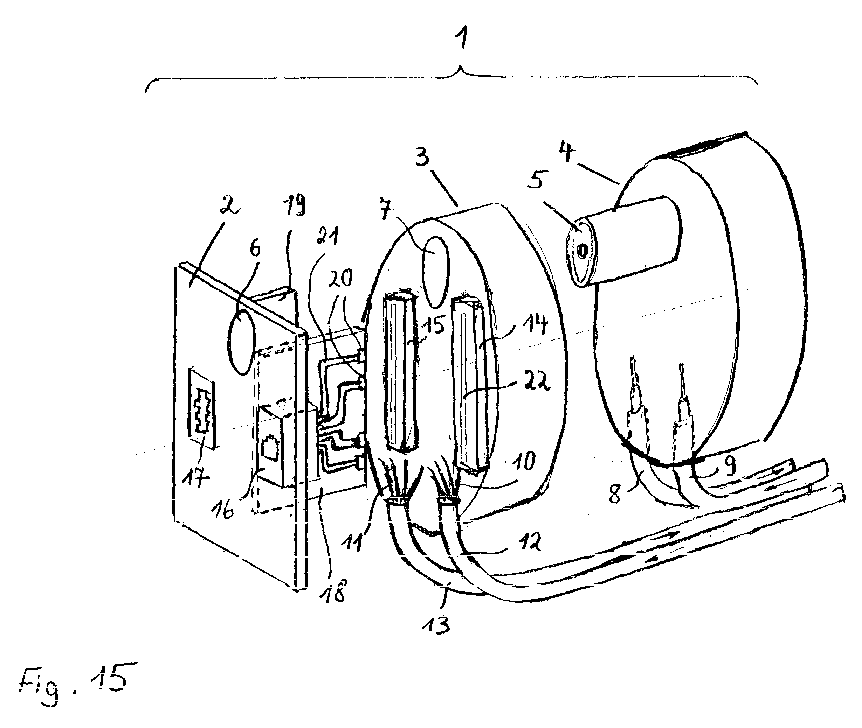

Die in Figur 15 schematisch in Form einer Explosionszeichnung dargestellte Anschlußdose 1 besteht aus einem Funktionsdeckel 2, einem Modul 3 für Datendienste sowie einem Modul 4 für Koaxdienste, wobei die beiden die jeweiligen Kontaktiereinheiten, Anschluß- und Halterungselemente aufnehmenden und lösbar miteinander verbundenen Module 3/4 aus einem Metall insbesondere aus Aluminium oder Zink gefertigt sind. Sowohl der Funktionsdeckel 2 als auch der mittlere Modul 3 weisen jeweils eine dem Koaxstecker 5 des hinteren Moduls 4 angepaßte Ausnehmungen 6/7 auf. Dieser der IEC-Norm entsprechende Stecker 5 ist beispielsweise über eine nicht dargestellte BNC-Steckverbindung mit den beiden, dem hinteren Modul 4 zugeführten Koaxialleitungen 8/9 verbunden. Es ist selbstverständlich auch möglich, den hinteren Modul 4 durch einen mit optischen Steckverbindungen/Steckern ausgestatteten und an optische Kabel oder LWL-Adern angeschlossenen Modul zu ersetzen.

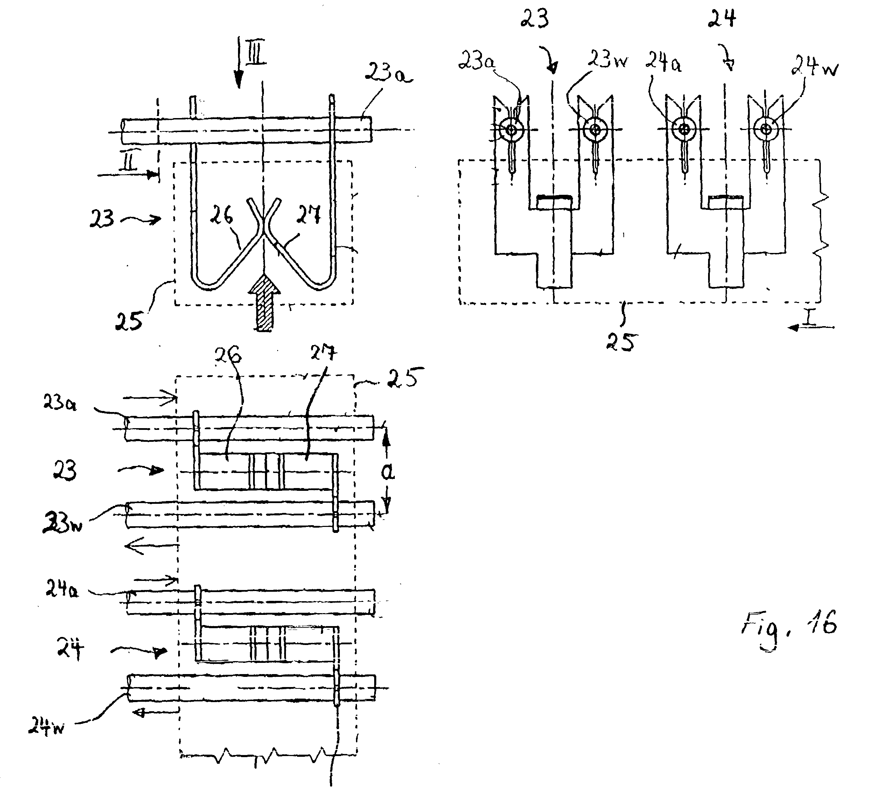

Die am deckelseitigen Modul 3 befestigten und an die Adern 10/11 der elektrischen Kabel 12/13 angeschlossenen Kontaktiereinheiten 14/15 enthalten eine Vielzahl isoliert in einer Halterung angeordnete Schneidklemmenpaare ( siehe Fig.16 ). Hierbei soll das der Kontaktiereinheit 14 zugeordnete Kabelpaar 12/13 beispielsweise ein digitales Signal (ISDN- oder LAN-Anwendung), das der Kontaktiereinheit 15 zugeführte Kabelpaar (nicht dargestellt) ein analoges Signal (analoges Telefonieren) übertragen. Die einer Kontaktiereinheit 14/15 jeweils zugeordnete Dienstebuchse 16/17 (RJ45- bzw. TAE-Buchse) ist am Funktionsdeckel 2 auf einer Platine 18/19 befestigt. Letztere weist eine Reihe von Kontaktflachen 20 auf, welche über Leiterbahnen 21 mit der Dienstebuchse 16 in Verbindung stehen. Da diese Kontaktflächen 20 entsprechend der Lage der Schneidklemmenpaare in der Kontaktiereinheit 14 an dosenseitigen Ende der Platine 18 angebracht sind, liegt das vom ankommenden Kabel 12 übertragene Signal bei aufgesetztem Funktionsdeckel 2 auch an den entsprechenden Eingängen der betreffenden Dienstebuchse 16 an. Weist auch die Rückseite der Platine 18 eine entsprechende Struktur von Kontaktflächen und Leiterbahnen auf, wird das Signal bzw. der Dienst vom ankommenden Kabel 12 in das abgehende Kabel 13, ggf. im angeschlossenen Endgerät geschaltet, durchgeschleift. Eine in den Schlitz 22 der Kontaktiereinheit 14 eingeführte Platine 18 ohne rückseitige Metallisierung schließt den Dienst hingegen ab, da in diesem Fall keine leitende Verbindung zwischen dem ankommenden und dem abgehenden Kabel 12/13 besteht.

Die Figur 16 zeigt zwei Schneidklemmenpaare 23/24 der Kontaktiereinheit 14 in verschiedenen Ansichten, wobei die gestrichelte Linie das mit einem Schlitz versehene Kunststoffgehause 25 der Kontaktiereinheit 14 darstellen soll. Ein Schneidklemmenpaar 23/24 hält und kontaktiert jeweils eine Ader 23a/24a des ankommenden Kabels 12 und eine Ader 23w/24w des abgehenden Kabels 13. Beide Adern 23a/w bzw. 24a/w sind bei nicht aufgesetztem Funktionsdeckel 2 bzw. beim Abschluß der Dose 1 mit einem Leerdeckel über die den Schneidklemmen zugeordneten Kontaktfedern 26/27 leitend miteinander verbunden (Dienst durchgeschleift). Beim Aufsetzen des Funktionsdeckels 2 tritt die Platine 18 in Pfeilrichtung durch den Schlitz 22 in das Gehäuse 25 der Kontaktiereinheit 14 ein und schiebt sich derart zwischen die Kontaktfedern 26/27, daß diese auf den korrespondierenden Kontaktflächen 20/21 der Platine 18 zu liegen kommen. Je nach Ausführung der Platine 18 (s. oben) ist der entsprechende Dienst dann (schaltbar) durchgeschleift oder abgeschlossen.

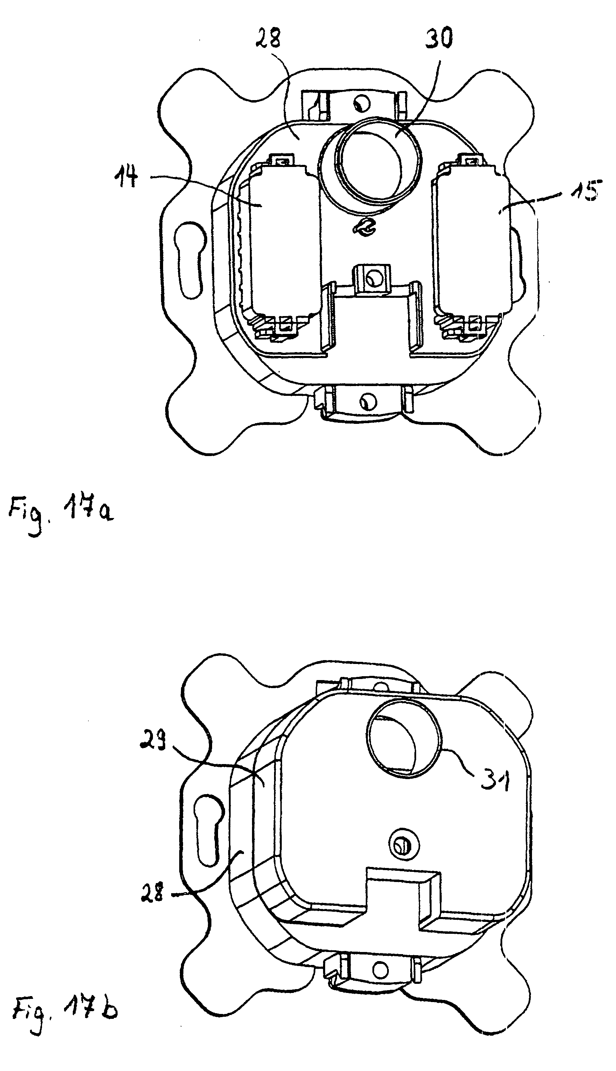

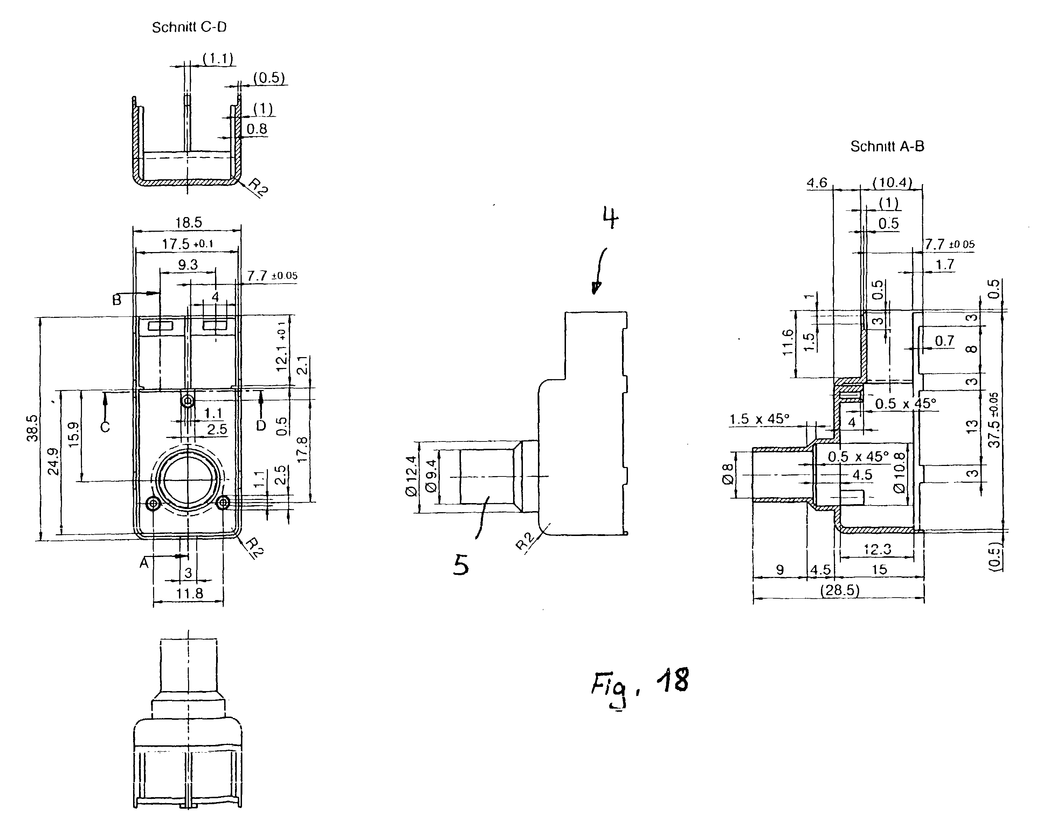

Wie die Figur 17 in perspektivischer Darstellung zeigt, kann der die Kontaktiereinheiten 14/15 aufnehmende Modul 3 aus zwei miteinander verschraubten Teilen 28/29 bestehen, wobei der deckelseitige Gehäuseteil 28 einen der Führung des Koaxsteckers 5 dienenden, zylindrischen Ansatz 30 (s. Fig. 17a) und der hintere Gehäuseteil 29 des Moduls 3 eine entsprechend groß bemessene Ausnehmung 31 aufweist (s. Fig. 17b). Der dem deckelseitigen Modul 3 angepaßte Koaxialmodur 4 ist in Figur 18 in verschiedenen Schnitten vergrößert im Maßstab 2:1 dargestellt. Ihn kann man beispielsweise mit Hilfe eines den Koaxialstecker 5 umfassenden Schnappverschlusses (nicht dargestellt) lösbar am deckelseitigen Modulgehäuse 3/28 befestigen.

Bei vielen Anwendungen gilt es insbesondere den Einfluß des Nahnebensprechens oder NEXT im Bereich der Kontaktiereinheiten weitgehend auszuschalten und gleichzeitig bis zu 16 Adern in einer Anschlußdose 1 von 60mm Durchmesser platzsparend aufzulegen. Außerdem wird häufig ein schaltbares Durchschleifen des Dienstes gefordert. In einer modular aufgebauten Anschlußdose 1 lassen sich diese Probleme in einfacher Weise lösen. So besitzt der in Figur 19 in Draufsicht dargestellte Modul 32 zwei möglichst weit entfernt voneinander angeordnete, mit jeweils vier Schneidklemmenpaaren SK1-SK4/SK5-SK8 ausgestattete und entsprechend Figur 16 aufgebaute Kontaktiereinheiten 33/34. Dem Modul 32 sind zwei sogenannte UTP-Kabel 35/36 (Unshielded Twisted Pair) zugeführt, welche im gezeigten Ausführungsbeispiel jeweils 8 paarwelse miteinander verdrillte Kupferadern enthalten. Jede Ader 1a-8a des ankommenden Kabels 35 ist hierbei über ein in einer Buchse angeordnetes Schneidklemmenpaar SK1-SK8 und deren Kontaktfedern mit der entsprechenden Ader 1w-8w des abgehenden Kabels 36 leitend verbunden. Der diesem Modul 32 zugeordnete Funktionsdeckel weist 2 x 4 entsprechend den Buchsen der Kontaktiereinheiten 33/34 in zwei Reihen angeordnete und nit einer Dienstebuchse verbundene Steckerstifte auf (vgl. die Fig. 2, 4 und 7). Je nach Ausführung des in die entsprechende Buchse eingeführten Steckerstiftes wird der Dienst abgeschlossen (Steckerstift einseitig metallisiert), ständig durchgeschleift (vollmetallischer Steckerstift) oder im angeschlossenen Teilnehmergerät schaltbar durchgeschleift (beidseitig metallisierter Steckerstift mit einem zwischen den Metallisierungen angeordneten Isolator).

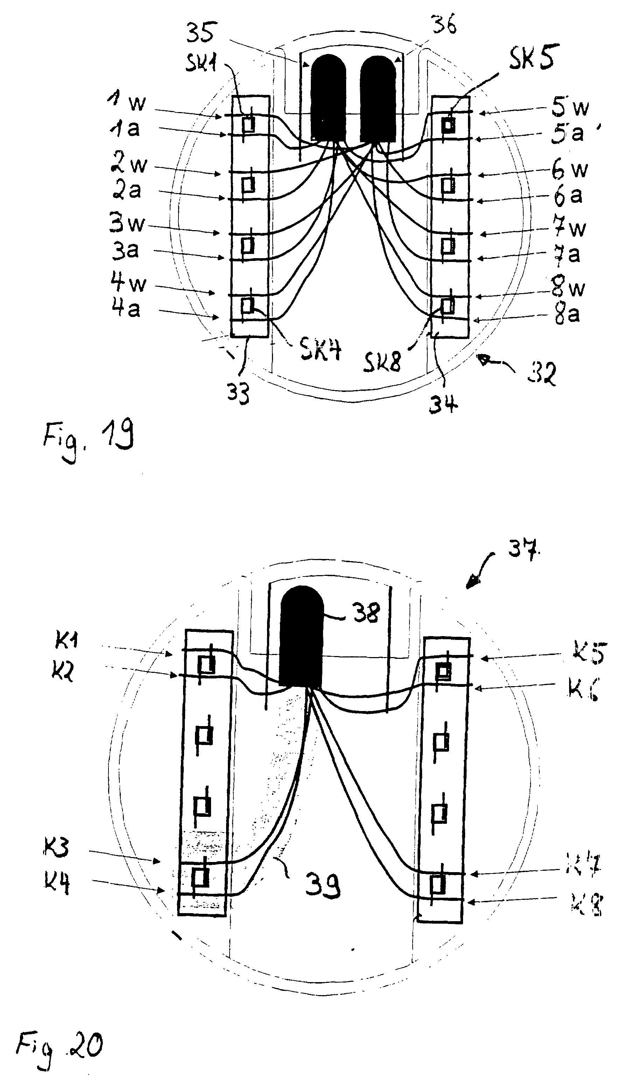

Keine praktischen Vorteile bietet die Möglichkeit des Durchschliefen bei LAN-Anwendung in sternförmig aufgebauten Netzen. Es genügt also, dem in Figur 20 dargestellten Modul 37 der Anschlußdose nur ein UTP-Kabel 38 zuzuführen and dessen 8 Kupferadern K1-K8 jeweils paarweise an ein Schneidklemmenpaar anzuschließen. Die elektrische Wechselwirkung zwischen den Aderpaaren ist bei der in Figur 20 dargestellten Art der Verdrahtung am kleinsten, das störende Nahnebensprechen somit erheblich vermindert. Der vergleichsweise große Abstand zwischen benachbarten Adernpaaren erlaubt es zudem, alle oder einzelne der Adernpaare zusätzlich mit einer als Abschirmung dienenden, geerdeten Metallfolie 39 zu umwickeln und die elektrische Wechselwirkung so weiter zu verringern. Ein vollständig abgeschirmtes System entsteht, wenn man auch den in der Buchse des Schneidklemmenpaares angeordneten Steckerstift entsprechend ummantelt.

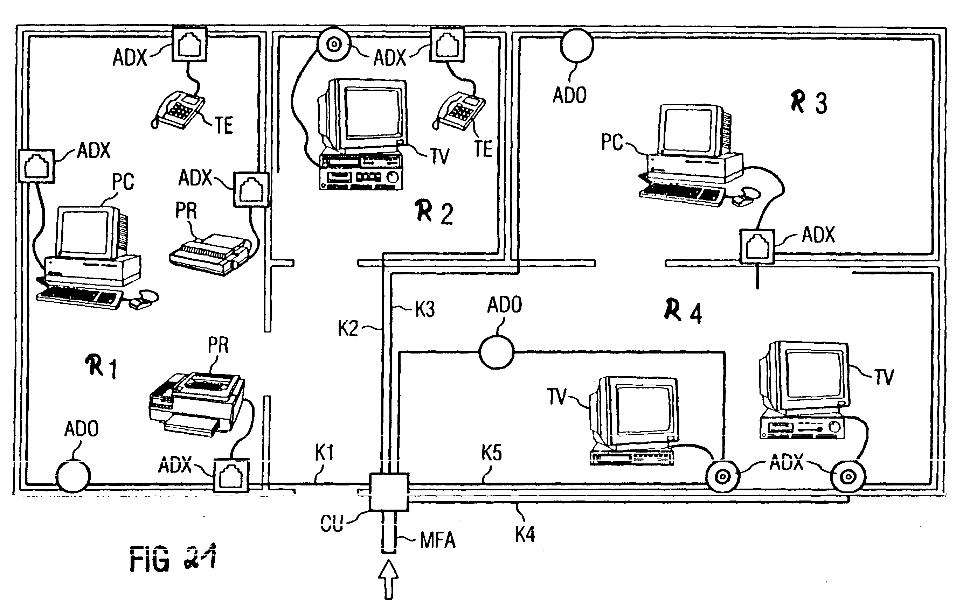

In Figur 21 sind die verschiedenen Anschlußmöglichkeiten innerhalb eines Verteilernetzes beispielhaft dargestellt. Von einer mit einem entsprechenden Multifunktions- Kabelanschluß MFA versehenen Zentralstelle gehen, vorzugsweise sternformig, verschiedene Kommunikationsleitungen K1 bis K5 , z.B. in Form von Hybridkabeln zu Räumen R1 - R5 ab. In den Räumen R1 R5 stehen unterschiedliche Teilnehmergeräte, insbesondere Telefone TE, Computer PC, Drucker PR und Fernsehempfänger TV. Einige der Anschlußdosen (ADX) sind über entsprechende Leitungen mit einem der genannten Geräte verbunden, d.h. mit Funktionsdeckeln gemäß den Figuren 4/5, 7/8, 9/10 oder 15 ausgestattet. Die anderen Anschlußdosen ADO sind nicht mit Geräten belegt und deshalb als Durchschleifdose (analog den Figuren 1 - 3 oder 6) ausgebildet, sofern es sich nicht gerade um eine Enddose handelt. Bei Enddosen genügt es im allgemeinen, nur jeweils eine Steckbuchsenleiste im Inneren vorzusehen.

## Patentansprüche

1. Verteilernetz mit mehreren, jeweils verschiedene Dienste übertragenden Leitungen (CK1, EK1, OK1) und mehreren, durch mindestens eine der Leitungen (CK1, EK1, OK1) miteinander verbundenen Anschlußdosen (AD1), wobei zumindest eine der Anschlußdosen (AD1) ein Anschlußelement (SST) zur Verbindung eines Teilnehmergerätes (PC) mit einer der den jeweiligen Dienst übertragenden Leitungen (EK1) aufweist, **dadurch gekennzeichnet**,
a) daß einer ersten Anschlußdose (AD1, AD6) mindestens zwei der Leitungen (CK1, EK1, OK1) zugeführt sind,
wobei die erste Anschlußdose (AD1, AD6) mehrere eingangsseitige erste Kontaktiereinheiten (CC11, EC11, OC11) und mehrere, mit den eingangseitigen ersten Kontaktiereinheiten (CC11, EC11, OC11) jeweils korrespondierende ausgangsseitige erste Kontaktiereinheiten (CC12, EC12, OC12) aufweist,
wobei eine jeweilige, der ersten Anschlußdose zuführte Leitung (EK1) eines entsprechenden Dienstes mit einer eingangsseitigen ersten Kontaktiereinheit (CC11, EC11, OC11) verbunden ist und eine jeweilige, von der ersten Anschlußdose (AD1, AD6) abgehende Leitung (EK2) des entsprechenden Dienstes mit einer ausgangsseitigen ersten Kontaktiereinheit (CC12, EC12, OC12) verbunden ist,
wobei die Anzahl der jeweiligen ersten Kontaktiereinheiten (CC11, EC11, OC11) größer oder gleich der Anzahl der zugeführten Leitungen (CK1, EK1, OK1) ist;
b) daß ein erster Funktionsdeckel (DF4) der ersten Anschlußdose (AD1, AD6) zumindest eine einer eingangsseitigen ersten Kontaktiereinheit (CC11, EC11, OC11) jeweils zugeordnete eingangsseitige zweite Kontaktiereinheit (CC11*, EC11*, OC11*) und/oder zumindest eine einer ausgangsseitigen ersten Kontaktiereinheit (CC12, EC12, OC12) jeweils zugeordnete ausgangsseitige zweite Kontaktiereinheit (CC12*, EC12*, OC12*) sowie ein mit der eingangsseitigen bzw. ausgangsseitigen zweiten Kontaktiereinheit (CC11*, EC11*, OC11*; CC12*, EC12*, OC12*) verbundenes, dem Abgriff eines Dienstes dienendes und von außen zugängliches Anschlußelement (SST) aufweist,
wobei die jeweilige zweite Kontaktiereinheit (CC11*, EC11*, OC11*; CC12*, EC12*, OC12*) an der der ersten Anschlußdose zugewandten Seite des Funktionsdeckels (DF4) angeordnet ist;
c) daß die dem Dienst zugeordneten ersten und zweiten Kontaktiereinheiten (CC11/CC12, EC11/EC12, OC11/OC12; CC11*/CC12*, EC11*/EC12*, OC11*/OC12*) jeweils derart ausgebildet sind, daß sie das Anschlußelement (SST) bei aufgesetztem ersten Funktionsdeckel (DF4) mit der den Dienst übertragenden Leitung (EK1) verbinden; und
d) daß die korrespondierenden eingangsseitigen und ausgangsseitigen ersten Kontaktiereinheiten (CC11/CC12, EC11/EC12, OC11/OC12) der ersten Anschlußdose (AD1, AD6) entweder dosenseitig oder deckelseitig zum Durchschleifen miteinander verbindbar sind.

2. Verteilernetz nach Anspruch 1,
**dadurch gekennzeichnet,**
**daß** die erste Kontaktiereinheit (CC11, EC11, OC11) den jeweiligen Leitungen (CK1, EK1, OK1) zugeordnete erste Kontaktelemente (CC11, EC11a, OC11) aufweist, und die der ersten Kontaktiereinheit zugeordnete zweite Kontaktiereinheit mit zweiten Kontaktelementen (CC11*, EC11a*, OC11*) derart ausgestattet ist, daß erste und zweite Kontaktelemente (CC11/CC11*, EC11a/EC11a*, OL11/OL11*) bei aufgesetztem Funktionsdeckel (DF4) ineinandergreifen und so die Verbindung zwischen dem Anschlußelement (SST) und der den Dienst übertragenden Leitung (EK1) herstellen.

3. Verteilernetz nach Anspruch 2,
**dadurch gekennzeichnet,**
**daß** die erste Kontaktiereinheit Steckbuchsen (CC11, EC11a, OC11) und/oder Steckerstifte als erste Kontaktelemente (CC11, EC11a, OC11) und die zweite Kontaktiereinheit Steckerstifte (CC11*, EC11a*, OC11*) und/oder Steckbuchsen als zweite Kontaktelemente aufweisen.

4. Verteilernetz nach Anspruch 3,
**gekennzeichnet durch**
elektrische, koaxiale oder optische Steckbuchsen oder Steckerstifte.

5. Verteilernetz nach einem der Ansprüche 1 bis 4,
**dadurch gekennzeichnet,**
**daß** die eingangsseitigen ersten Kontaktiereinheiten jeweils eingangsseitige erste Kontaktelemente mit jeweils einer eingangsseitigen Schneidklemme und einem als Feder ausgebildeten eingangsseitigen Kontaktstück (26), und die ausgangsseitigen ersten Kontaktiereinheiten jeweils zweite Kontaktelemente mit jeweils einer ausgangsseitigen Schneidklemme und einem als Feder ausgebildeten ausgangsseitigen Kontaktstück (27) aufweisen,
wobei die eingangsseitigen ersten Schneideklemmen jeweils eine Ader (23a, 24a) der der Dose zugeführten Leitung (12) eines entsprechenden Dienstes halten und kontaktieren, und die ausgangsseitigen ersten Schneideklemmen jeweils eine Ader (23w, 24w) der von der Dose abgehenden Leitung (13) des entsprechenden Dienstes halten und kontaktieren,
wobei jeweils eine eingangsseitige erste Schneidklemme und eine ausgangsseitige erste Schneidklemme ein Paar (23, 24) von Schneidklemmen bilden, die über die als Federn ausgebildete, sich bei nicht aufgesetztem Funktionsdeckel berührenden eingangsseitigen bzw. ausgangsseitigen Kontaktstücke (26, 27) in elektrischem Kontakt miteinander stehen.

6. Verteilernetz nach Anspruch 5,
**dadurch gekennzeichnet,**
**daß** zweite Kontaktelemente (20) einer den eingangsseitigen und ausgangsseitigen Kontaktstücken (26, 27) zugeordneten zweiten Kontaktiereinheit (18, 19) die eingangsseitigen und ausgangsseitigen Kontaktstücke (26, 27) bei aufgesetztem Funktionsdeckel (2) mechanisch voneinander trennen.

7. Verteilernetz nach Anspruch 6,
**dadurch gekennzeichnet,**
**daß** zumindest ein zweites Kontaktelement (20) der zweiten Kontaktiereinheit (18, 19) derart ausgebildet ist, daß es die eingangsseitigen und ausgangsseitigen Kontaktstücke (26, 27)
a) elektrisch leitend miteinander verbindet oder
b) über die zweite Kontaktiereinheit (18, 19), über eine im Funktionsdeckel (2) vorhandene Schaltung oder über das angeschlossene Teilnehmergerät schaltbar miteinander verbindet oder
c) elektrisch voneinander trennt und den Dienst abschließt.

8. Verteilernetz nach einem der Ansprüche 5 bis 7,
**dadurch gekennzeichnet,**
**daß** zumindest eines der einem Schneidklemmenpaar (23, 24) zugeführten Paare elektrischer Adern (K3, K4) von einer elektrischen Abschirmung (39) umhüllt ist.

9. Verteilernetz nach einem der Ansprüche 5 bis 8,
**dadurch gekennzeichnet,**
**daß** ein Anschlußelement (16, 17) an der zweiten Kontaktiereinheit (18, 19) gehaltert und über Leiterbahnen (21) mit den zweiten Kontaktelementen (20) verbunden ist, die als metallische Kontaktelementen (20) ausgebildet sind, wobei die zweiten Kontaktelemente (20) entsprechend der Lage der eingangsseitigen und ausgangsseitigen Kontaktstücke (26, 27) am dosenseitigen Ende der zweiten Kontaktiereinheit (18, 19) angeordnet sind.

10. Verteilernetz nach einem der Ansprüche 1 bis 9,
**dadurch gekennzeichnet,**
**daß** die erste Anschlußdose (1) modular aufgebaut ist, wobei in jedem der Module (3, 4) zumindest eine mit der entsprechenden Leitung (12, 9) verbundenen Kontaktiereinrichtung (14, 15) angeordnet ist.

11. Verteilernetz nach Anspruch 10,
**dadurch gekennzeichnet,**
**daß** die Module (3, 4) in achsialer Richtung hintereinander angeordnet und lösbar miteinander verbunden sind.

12. Verteilernetz nach Anspruch 10 oder 11,
**dadurch gekennzeichnet,**
**daß** sowohl das der jeweiligen eingangsseitigen bzw. ausgangsseitigen ersten Kontaktiereinheit zugeordnete zweite Kontaktelement (20) als auch das mit dem zweiten Kontaktelement (20) verbundene Anschlußelement (6) im betreffenden Modul (4) angeordnet oder an ihm befestigt sind und daß der Funktionsdeckel (2) eine dem Anschlußelement (5) angepaßte Ausnehmung (6) aufweist.

13. Verteilernetz nach einem der vorhergehenden Ansprüche,
**dadurch gekennzeichnet,**
**daß** ein von einer Koaxialleitung (CK1) übertragener Dienst durchgeschleift bleibt und daß das Anschlußelement (STK) über eine Ankoppelschaltung (LC91) an die durchgeschleifte Koaxialleitung (VC91) angekoppelt ist.

14. Verteilernetz nach Anspruch 13,
**dadurch gekennzeichnet,**
**daß** die Ankoppelschaltung derart ausgebildet ist, daß eine möglichst geringe Störung des Wellenwiderstandes der Koaxialleitung (CK1) auftritt.

15. Verteilernetz nach Anspruch 13 oder 14,
**dadurch gekennzeichnet,**
**daß** die an Koppelschaltungen frequenzselekiv ausgebildet ist.

16. Verteilernetz nach einem der Ansprüche 13 bis 15,
**dadurch gekennzeichnet,**
**daß** die Ankoppelschaltung mittels eines Dämpfungsgliedes eine ausreichend hohe Entkopplung gegenüber der durchgeschleiften Koaxialleitung (CK1) bereitstellt.

17. Verteilernetz nach einem der vorhergehenden Ansprüche,
**gekennzeichnet durch**
mechanische Führungselemente (FE1/FE2, FE1*/FE2*) in den Anschlußdosen (AD1) und den jeweiligen Funktionsdeckeln (DL1) zur Ausrichtung der einander zugeordneten Kontaktiereinheiten und/oder Kontaktelementen.

18. Verteilernetz nach einem der Ansprüche 1 bis 12,
**dadurch gekennzeichnet,**
**daß** eine entsprechend der ersten Anschlußdose aufgebaute zweite Anschlußdose mit einem kein Anschlußelement (SST) aufweisenden, ansonsten entsprechend dem ersten Funktionsdeckel ausgebildeten zweiten Funktionsdeckel verschlossen ist.

## Claims

1. Distribution network with a plurality of lines (CK1, EK1, OK1) each transmitting various services and a plurality of junction boxes (AD1) connected to one another by at least one of the lines (CK1, EK1, OK1), at least one of the junction boxes (AD1) comprising a connecting element (SST) for connecting a user terminal (PC) to one of the lines (EK1) transmitting the respective service, **characterised in that**
a) at least two of the lines (CK1, EK1, OK1) are fed to a first junction box (AD1, AD6), the first junction box (AD1, AD6) comprising a plurality of first input-side contacting units (CC11, BC11, OC11) and a plurality of first output-side contacting units (CC12, EC12, OC12) each corresponding with the first input-side contacting units (CC11, EC11, OC11), a respective line (EK1) of a corresponding service fed to the first junction box being connected to a first input-side contacting unit (CC11, EC11, OC11) and a respective line (EK2) of the corresponding service leaving the first junction box (AD1, AD6) being connected to a first output-side contacting unit (CC12, EC12, OC12), the number of respective first contacting units (CC11, EC11, OC11) being greater than or equal to the number of fed lines (CK1, EK1, OK1);
b) **in that** a first functional cover (DF4) of the first junction box (AD1, AD6) comprises at least one respective second input-side contacting unit (CC11*, EC11*, OC11*) associated with a first input-side contacting unit (CC11, EC11, OC11) and/or at least one respective second output-side contacting unit (CC12*, EC12*, OC12*) associated with a first output-side contacting unit (CC12, EC12, OC12) and a connecting element (SST) connected to the second input-side or output-side contacting unit (CC11*, EC11*, OC11*, CC12*, EC12*, OC12*) used for tapping a service and accessible from the outside, the respective second contacting unit (CC11*, EC11*, OC11*, CC12*, EC12*, OC12*) being arranged on the side of the functional cover (DF4) facing the first junction box;
c) **in that** the first and second contacting units (CC11/CC12, EC11/EC12, OC11/OC12; CC11*/CC12*, EC11*/EC12*, OC11*/OC12*) associated with the service are each configured in such a way that they connect the connecting element (SST) to the line (EK1) transmitting the service when the first functional cover (DF4) is in position; and
d) **in that** the corresponding first input-side and output-side contacting units (CC11/CC12, EC11/EC12, OC11/OC12) of the first junction box (AD1, AD6) can either be connected to one another at the box side or cover side for looping through.

2. Distribution network according to claim 1, **characterised in that** the first contacting unit (CC11, EC11, OC11) comprises first contact elements (CC11, EC11a, OC11) associated with the respective lines (CK1, EK1, OK1) and the second contacting unit associated with the first contacting unit is equipped with second contact elements (CC11*, EC11a*, OC11*) in such a way that first and second contact elements (CC11/CC11*, EC11a/EC11a*, OL11/OL11*) mesh when the functional cover (DF4) is in position and therefore produce the connection between the connecting element (SST) and the line (EK1) transmitting the service.

3. Distribution network according to claim 2, **characterised in that** the first contacting unit comprises socket contacts (CC11, EC11a, OC11) and/or contact pins as first contact elements (CC11, EC11a, OC11) and the second contacting unit comprises contact pins (CC11*, EC11a*, OC11*) and/or sockets contacts as second contact elements.

4. Distribution network according to claim 3, **characterised by** electrical, coaxial or optical socket contacts or contact pins.

5. Distribution network according to any of claims 1 to 4, **characterised in that** the first input-side contacting units each comprise first input-side contact elements with a respective input-side insulation piercing-connecting device and an input-side contact piece (26) formed as a spring, and the first output-side contacting units each comprise second contact elements with a respective output- side insulation piercing-connecting device and an output-side contact piece (27) formed as a spring, the first input-side insulation piercing-connecting devices each holding and contacting an insulated conductor (23a, 24a) of the line (12) of a corresponding service fed to the box and the first output-side insulation piercing-connecting devices each hold and contact an insulated conductor (23w, 24w) of the line (13) of the corresponding service leaving the box, a respective first input-side insulation piercing-connecting device and a first output-side insulation piercing-connecting device forming a pair (23, 24) of insulation piercing-connecting devices which are in electrical contact with one another via the input-side or output-side contact pieces (26, 27) constructed as springs and contacting one another when the functional cover is not in position.

6. Distribution network according to claim 5, **characterised in that** the second contact element (20) of a second contacting unit (18, 19) associated with the input-side and output-side contact pieces (26, 27) mechanically separate from one another the input-side and output-side contact pieces (26, 27) when the functional cover (2) is in position.

7. Distribution network according to claim 6, **characterised in that** at least one second contact element (20) of the second contacting unit (18, 19) is designed in such a way that it
a) conductively connects to one another
the input-side and output-side contact pieces (26, 27) or
b) switchably connects them to one another via the second contacting unit (18, 19) via a circuit present in the functional cover (2) or via the connected user terminal or
c) electrically separates them from one another and closes the service.

8. Distribution network according to any of claims 5 to 7, **characterised in that** at least one of the pairs of electrical insulated conductors (K3, K4) fed to a pair of insulation piercing-connecting devices (23, 24) is surrounded by an electrical shield (39).

9. Distribution network according to any of claims 5 to 8, **characterised in that** a connecting element (16, 17) is held on the second contacting unit (18, 19) and is connected via printed conductors (21) to the second contact elements (20) which are designed as metal contact elements (20), the second contact elements (20) being arranged at the box-side end of the second contacting unit (18, 19) in accordance with the position of the input-side and output-side contact pieces (26, 27).

10. Distribution network according to any of claims 1 to 9, **characterised in that** the first junction box (1) is modular in design, at least one contacting device (14, 15) connected to the corresponding line (12, 9) being arranged in each of the modules (3, 4).

11. Distribution network according to claim 10, **characterised in that** the modules (3, 4) are arranged one behind the other in the axial direction and are detachably connected to one another.

12. Distribution network according to claim 10 or 11, **characterised in that** both the second contact element (20) associated with the respective first input-side or output-side contacting unit and the connecting element (6) connected to the second contact element (20) are arranged in the relevant module (4) or are fastened thereto, and **in that** the functional cover (2) has a recess (6) adapted to the connecting element (5).

13. Distribution network according to any of the preceding claims, **characterised in that** a service transmitted by a coaxial line (CK1) remains looped through and **in that** the connecting element (STK) is coupled via a coupling circuit (LC91) to the looped-through coaxial line (VC91).

14. Distribution network according to claim 13, **characterised in that** the coupling circuit is designed in such a way that there is the smallest possible disturbance in the surge impedance of the coaxial line (CK1).

15. Distribution network according to claim 13 or 14, **characterised in that** the coupling circuit is frequency selective.

16. Distribution network according to any of claims 13 to 15, **characterised in that** by means of an attenuator the coupling circuit provides a sufficiently high decoupling with respect to the looped-through coaxial line (CK1).

17. Distribution network according to any of the preceding claims, **characterised by** mechanical guide elements (FE1/FE2, FE1*/FE2*) in the junction boxes (AD1) and the respective functional covers (DL1) for aligning the contacting units and/or contact elements associated with one another.

18. Distribution network according to any of claims 1 to 12, **characterised in that** a second junction box designed in accordance with the first junction box is closed by a second functional cover without a connecting element (SST) but otherwise designed in accordance with the first functional cover.

## Revendications

1. Réseau de distribution comportant plusieurs lignes (CK1, EK1, OK1) qui transmettent respectivement différents services, et plusieurs boîtes de connexion (AD1), qui sont reliées entre elles par au moins l'une des lignes (CK1, EK1, OK1), au moins l'une des boîtes de connexion (AD1) comportant un élément de connexion (SST) servant à relier un appareil d'abonné (PC) à l'une des lignes (EK1) transmettant le service respectif, **caractérisé en ce**
a) qu'au moins deux des lignes (CK1, EK1, OK1) aboutit à une première boîte de connexion (AD1, AD6),
la première boîte de connexion (AD1, AD6) comportant plusieurs premières unités de contact côté entrée (CC11, EC11, OC11) et plusieurs premières unités de contact côté sortie (CC12, EC12, OC12), qui correspondent respectivement aux premières unités de contact côté entrée (CC11, EC11, OC11),
une ligne respective (EK1), qui aboutit à la première boîte de connexion, d'un service correspondant étant reliée à une première unité de contact côté entrée (CC1, EC11, OC11), et une ligne respective (EK2), qui part de la première boîte de connexion (AD1, AD6), du service correspondant étant reliée à une première unité de contact côté sortie (CC12, EC12, OC12),
le nombre des premières unités de contact respectives (CC11, EC11, OC11) étant supérieur ou égal au nombre des lignes d'arrivée (CK1, EK1, OK1);
b) qu'un premier couvercle fonctionnel (DF4) de la première boîte de connexion (AD1, AD6) comporte au moins une seconde unité de contact côté entrée (CC11*, EC11*, OC11*) respectivement associée à une première unité de contact côté entrée (CC11, EC11, OC11), et/ou au moins une seconde unité de contact côté sortie (CC12*, EC12*, OC12*), respectivement associée à une première unité de contact côté sortie (CC12, EC12, OC12), ainsi qu'un élément de connexion (SST) qui est relié à la seconde unité de contact située côté entrée ou côté sortie (CC11*, EC11*, OC11*; CC12*, EC12*, OC12*) qui sert à la réception d'un service et qui est accessible de l'extérieur,
la seconde unité de contact respective (CC11*, EC11*,OC11*,CC12*,EC12*,OC12*) étant disposée sur le côté, tourné vers la première boîte de connexion, du couvercle fonctionnel (DF4);
c) que les première et seconde unités de contact (CC11/CC12, EC11/EC12, OC11/OC12; CC11*/CC12*, EC11*/EC12*, OC11*/OC12*), associées au service sont agencées respectivement de telle sorte qu'elles relient l'élément de connexion (SST) à la ligne (EK1), qui transmet le service, lorsque le premier couvercle fonctionnel (DF4) est mis en place; et
d) que les premières unités de contact correspondantes côté entrée et côté sortie (CC11/CC12, EC11/EC12, OC11/OC12) de la première boîte de connexion (AD1, AD6) peuvent être reliées entre elles soit du côté de la boîte, soit du côté du couvercle pour une fermeture de boucle.

2. Réseau de distribution selon la revendication 1, **caractérisé en ce**
**que** la première unité de contact (CC11, EC11, OC11) comporte des premiers éléments de contact (CC11, EC11a, OC11), qui sont associés aux lignes respectives (CK1, EK1, OK1), et que la seconde unité de contact associée à la première unité de contact est équipée de seconds éléments de contact (CC11*, EC11a*, OC11*) de telle sorte que des premier et second éléments de contact (CC11/CC11*, EC11a/EC11a*, OL11/OL11*) s'interpénètrent lorsque le couvercle fonctionnel (DF4) est mis en place et établissent ainsi la liaison entre l'élément de connexion (SST) et la ligne (EK1) transmettant le service.

3. Réseau de distribution selon la revendication 2, **caractérisé en ce que** la première unité de contact comporte des douilles d'enfichage (CC11, EC11a, OC11) et/ou des fiches de contact en tant que premiers éléments de contact (CC11, EC11a, OC11), et que la seconde unité de contact comprend des broches enfichables (OC11*, EC11a*, OC*) et/ou des douilles d'enfichage en tant que seconds éléments de contact.

4. Réseau de distribution selon la revendication 3, **caractérisé par** des douilles d'enfichage ou des broches d'enfichage électriques, coaxiales ou optiques.

5. Réseau de distribution selon l'une des revendications 1 à 4, **caractérisé en ce que** les premières unités de contact côté entrée comportent respectivement des premiers éléments de contact côté entrée possédant chacun une borne à découpage côté entrée et une pièce de contact côté entrée (26) agencée sous la forme d'un ressort, et que les premières unités de contact côté sortie comportent respectivement des seconds éléments de contact possédant chacun une borne à découpage située côté sortie et une pièce de contact côté sortie (27) agencée sous la forme d'un ressort,
les premières bornes à découpage côté entrée retenant et touchant respectivement un conducteur (23a, 24e) de la ligne (12), qui aboutit à la boîte, d'un service correspondant et que les premières bornes à découpage côté sortie maintiennent et touchent respectivement un conducteur (23w, 24w) de la ligne (13), qui part de la boîte, du service correspondant,
respectivement une première borne à découpage côté entrée et une première borne à découpage côté sortie forment une paire (23,24) de bornes à découpage, qui sont en contact électrique entre elles par l'intermédiaire des pièces de contact (26, 27) côté entrée et côté sortie, qui sont agencées sous la forme de ressorts et se touchent lorsque le couvercle fonctionnel n'est pas mis en place.

6. Réseau de distribution selon la revendication 5, **caractérisé en ce que** des seconds éléments de contact (20) d'une seconde unité de contact (18, 19) associée aux pièces de contact (26, 27) situées côté entrée et côté sortie, séparent mécaniquement l'une de l'autre les pièces (26, 27) situées côté entrée et côté sortie, lorsque le couvercle fonctionnel (2) est mis en place.

7. Réseau de distribution selon la revendication 6, **caractérisé en ce qu'**au moins un second élément de contact (20) de la seconde unité de contact (18, 19) est agencé de telle sorte que relie les pièces de contact (26, 27) côté entrée et côté sortie,
a) sont reliées entre elles d'une manière électriquement conductrice, ou
b) sont reliées entre elles d'une manière commutable par l'intermédiaire de la seconde unité de contact (18, 19) ou par l'intermédiaire d'un circuit présent dans le couvercle fonctionnel (2) ou par l'intermédiaire de l'appareil d'abonné raccordé, ou
c) sont séparées électriquement l'une de l'autre et le service est interrompu par ce second élément de contact.

8. Réseau de distribution selon l'une des revendications 5 à 7, **caractérisé en ce qu'**au moins l'un des conducteurs des paires de conducteurs électriques (K3, K4), qui sont raccordées à une paire de bornes à découpage (23, 24) est entouré par un blindage électrique (39).

9. Réseau de distribution selon l'une des revendications 5 à 8, **caractérisé en ce qu'**un élément de connexion (16, 17) est retenu sur la seconde unité de contact (18, 19) et est relié par l'intermédiaire de voies conductrices (21) aux seconds éléments de contact (20), qui sont agencés sous la forme d'éléments de contact métalliques (20), les seconds éléments de contact (20) étant disposés conformément à la position des pièces de contact (26, 27) situées côté entrée et côté sortie, sur l'extrémité côté boîte de la seconde unité de contact (18, 19).

10. Réseau de distribution selon l'une des revendications 1 à 9, **caractérisé en ce que** la première boîte de connexion (1) possède un agencement modulaire, et au moins un dispositif de contact (14, 15) relié à la ligne correspondante (12, 9) et disposée dans chacun des modules (3, 4).

11. Réseau de distribution selon la revendication 10, **caractérisé en ce que** les modules (3,4) sont disposés l'un derrière l'autre dans la direction axiale et sont reliés entre eux de façon amovible.

12. Réseau de distribution selon la revendication 10 ou 11, **caractérisé en ce qu'**aussi bien le second élément de contact (20), associé à la première unité de contact respective côté entrée ou côté sortie que l'élément de connexion (6), relié au second élément de contact (20), sont disposés dans le module considéré (4) ou sont fixés à ce dernier et que le couvercle fonctionnel (2) possède un évidement (6) adapté à l'élément de connexion (5).

13. Réseau de distribution selon l'une des revendications précédentes, **caractérisé par le fait qu'**un service transmis par une ligne coaxiale (CK1) reste toujours inséré en boucle et que l'élément de connexion (STK) est couplé par l'intermédiaire d'un circuit de couplage (LC91) à la ligne coaxiale (C91) insérée en boucle.

14. Réseau de distribution selon la revendication 13, **caractérisé en ce que** le circuit de couplage est agencé de telle sorte qu'il apparaît une perturbation aussi faible que possible de l'impédance caractéristique de la ligne coaxiale (CK1).

15. Réseau de distribution selon la revendication 13 ou 14, **caractérisé en ce que** le circuit de couplage est agencé de manière à être sélectif en fréquence.

16. Réseau de distribution selon l'une des revendications 13 à 15, **caractérisé en ce que** le circuit de couplage fournit au moyen d'un circuit d'amortissement, un découplage suffisamment élevé vis-à-vis de la ligne coaxiale (CK1) insérée en boucle.

17. Réseau de distribution selon l'une des revendications précédentes, **caractérisé par** des éléments de guidage mécaniques (FE1/FE2, FE1*/FE2*) situés dans les boîtes de connexion (AD) et dans les couvercles fonctionnels respectifs (DL1) pour l'alignement des unités de contact associées entre elles et/ou des éléments de contact associés entre eux.

18. Réseau de distribution selon l'une des revendications 1 à 12, **caractérisé par** une seconde boîte de connexion agencée d'une manière qui correspond à la première boîte de connexion et fermée par un second couvercle fonctionnel qui ne possède aucun élément de connexion (SST) et est agencé par ailleurs d'une manière qui correspond au premier couvercle fonctionnel.
